# EUROPÄISCHE PATENTSCHRIFT

(11) **EP 1 159 191 B1**
(45) Veröffentlichungstag und Bekanntmachung des Hinweises auf die Patenterteilung: **05.01.2005**
(21) Anmeldenummer: 00907668.8
(22) Anmeldetag: 04.03.2000
(51) Int. Cl.: B64C 27/14, B64C 27/605, B64C 27/32

(54) **ROTORMAST EINES HUBSCHRAUBERS**
ROTOR MAST OF A HELICOPTER
MAT DE ROTOR D'UN HELICOPTERE

(30) Priorität: 10.03.1999 DE 19910448
(43) Veröffentlichungstag der Anmeldung: 05.12.2001
(73) Patentinhaber: ZF Luftfahrttechnik GmbH, 34379 Calden (DE)
(72) Erfinder: FISCHER, Manfred, D-88690 Uhldingen-Mühlhofen (DE); MÜLLER, Josef, D-88682 Salem (DE)
(74) Vertreter: Zietlow, Karl-Peter
(86) Internationale Anmeldenummer: PCT/EP2000/001921
(87) Internationale Veröffentlichungsnummer: WO 2000/053490

(56) Entgegenhaltungen:
- EP-A- 0 250 135
- US-A- 4 375 940

## Beschreibung

Die Erfindung betrifft einen Hubschrauber mit den Merkmalen nach dem Oberbegriff von Anspruch 1.

Das Kernstück eines Hubschraubers ist sein Hauptrotor. Ein oder mehrere Triebwerke treiben den Hauptrotor über ein Getriebe und einen Rotormast an, der im Gehäuse des Getriebes drehbar gelagert und an dem der Rotorkopf befestigt ist.

Der Hauptrotor sorgt mit seinen zwei und mehr Rotorblättern, die mit dem Rotorkopf um ihre Längsachse einstellbar verbunden sind, nicht nur für den Auftrieb, sondern auch für den Vortrieb. Die Rotorblätter sind entweder über ein Schlaggelenk und ein Schwenkgelenk oder über einen torsionsweichen Stab an dem Rotorkopf angelenkt. Um einen Auftrieb zu erzeugen, werden die Rotorblätter kollektiv, d. h. synchron um einen Winkel zur Rotationsebene angestellt. Einen Vortrieb erzielt man durch eine zyklische Ansteuerung, d. h. der Einstellwinkel eines Rotorblatts durchläuft während einer Umdrehung des Rotormastes ein Maximum und ein Minimum. Die Lage der Extremwerte bestimmt die Flugrichtung.

Der Hubschrauberpilot steuert die Rotorblätter über eine Taumelscheibe an. Sie besteht aus einem stationären Teil, der über eine sogenannte Schere drehfest, aber axial verschiebbar sowie zum Rotormast in alle Richtungen kippbar am Gehäuse eines Getriebes befestigt ist, und aus einem drehbaren Teil, der über Radial- und Axiallager gegenüber dem stationären Teil drehbar gelagert ist. Der drehbare Teil bewegt sich mit dem stationären Teil in axialer Richtung und macht ebenfalls die Kippbewegungen mit. Er ist über eine weitere Schere am Rotorkopf befestigt.

Die Bewegung der Taumelscheibe wird über einen Hebelmechanismus auf Rotorblattaufnahmen am Rotorkopf übertragen, und zwar meistens in der Weise, daß sich der Einstellwinkel eines Rotorblatts mit der Annäherung der Taumelscheibe an den Rotorkopf vergrößert.

Der Hubschrauberpilot verstellt für die Flugmanöver die Taumelscheibe über einen weiteren Hebelmechanismus. Parallel zu diesem sind häufig hydraulische Servomotoren angeordnet, die zum einen die Ansteuerung erleichtern und zum anderen eine überlagerte Regelung ermöglichen, die auftretenden Rotorblattschwingungen entgegenwirkt.

Aus der US 3 080 002 ist ein Hubschrauberantrieb bekannt, bei dem ein Rotormast in einem Getriebegehäuse drehbar gelagert ist, und zwar an seinem äußeren Umfang unmittelbar im Getriebegehäuse und in einem inneren Hohlraum an einer Tragsäule, die fest mit dem Getriebegehäuse verbunden ist. Am äußeren Umfang des Rotormastes ist formschlüssig ein Antriebszahnrad mit dem Rotormast verbunden, das über ein Ritzel von einem Triebwerk des Hubschraubers angetrieben wird. Eine Taumelscheibe ist oberhalb des Rotormastes und des Rotorkopfes angeordnet und wird über Stellglieder betätigt, die durch die Tragsäule und den Rotormast geführt sind.

Die EP 0 250 135 A2 zeigt einen Hubschrauberrotorkopf, bei dem die Taumelscheibe in dem Bauraum des hohlen Rotormastes angeordnet ist. Der Rotormast weist Öffnungen auf, durch welche hindurch Übertragungsstangen zur Anlenkung der Steuerstangen geführt sind.

Der Erfindung liegt die Aufgabe zugrunde, bei einem Hubschrauber der eingangs genannten Art den Rotormast besser im Gehäuse des Getriebes zu lagern und die Kräfte günstiger vom Getriebe in den Rotormast einzuleiten. Außerdem soll die Taumelscheibe besser geschützt angeordnet sein. Diese Aufgabe wird gemäß der Erfindung durch die Merkmale des Anspruchs 1 gelöst.

Nach der Erfindung erweitert sich der Rotormast trichterförmig zum Gehäuse des Getriebes hin, wobei das Sammelrad über einen hohlen Wellenstumpf am erweiterten Ende des Rotormastes angeflanscht ist und der Wellenstumpf und der Rotormast gemeinsam auf einem großen Durchmesser im Gehäuse drehbar gelagert sind.

Die trichterförmige Erweiterung des Rotormastes reduziert die Spannungen mit zunehmendem Durchmesser, so daß die Verbindung zwischen dem Wellenstumpf bzw. dem Sammelrad und dem Rotormast, die auf einem großen Durchmesser liegt, nur mit sehr geringen Spannungen belastet ist. Ferner werden die Antriebs- und Lagerkräfte auf kürzestem Wege in das Getriebegehäuse geleitet. Dadurch werden Deformationen im Zahneingriff weitgehend vermieden. Ferner verringert sich durch das gemeinsame Lager für den Rotormast und das Sammelrad die Teilezahl.

Durch die trichterförmige Erweiterung des Rotormastes und den großen Lagerdurchmesser wird Bauraum gewonnen, z. B. innerhalb des gemeinsamen Lagers, um die Taumelscheibe in das Getriebegehäuse zu integrieren. Sie kann somit durch die Getriebeschmierung versorgt werden und ist gegen Verschmutzung von außen geschützt.

Bei Hubschraubern, bei denen die Rotorblätter über Schwenk- und Schlaggelenke am Rotormast befestigt sind, können die am drehbaren Teil der Taumelscheibe angreifenden Steuerstangen durch den Rotormast und den Rotorkopf geführt werden und an Schwenkhebeln für die Rotorblätter angreifen, die drehbar im Rotorkopf gelagert sind. Die Steuerungsteile sind somit insgesamt geschützt und die Luftströmung wird nicht durch äußere Steuerstangen beeinträchtigt.

Bei Hubschraubern, bei denen die Rotorblätter ohne Schwenk- und Schlaggelenke nur über einen torsionsweichen Stab am Rotormast befestigt sind, ist es erforderlich, daß die Steuerstangen außerhalb des Rotormastes verlaufen. Um die Taumelscheibe dennoch gegen Witterungseinflüsse zu schützen und durch die Getriebeschmierung zu versorgen, wird nach einer Ausgestaltung der Erfindung das Gestänge zum Ansteuern der Rotorblätter von dem drehbaren Teil der im Getriebe integrierten Taumelscheibe aus durch den Mantel des trichterförmigen Teils des Rotormastes nach außen geführt, wobei das Gestänge zweckmäßigerweise einen Umlenkhebel beinhaltet, der am Rotormast gelagert ist und innere Steuerstangen mit äußeren Steuerstangen gelenkig verbindet.

In der Beschreibung und in den Ansprüchen sind zahlreiche Merkmale im Zusammenhang dargestellt und beschrieben. Der Fachmann wird die kombinierten Merkmale zweckmäßigerweise im Sinne der zu lösenden Aufgaben auch einzeln betrachten und zu sinnvollen weiteren Kombinationen zusammenfassen.

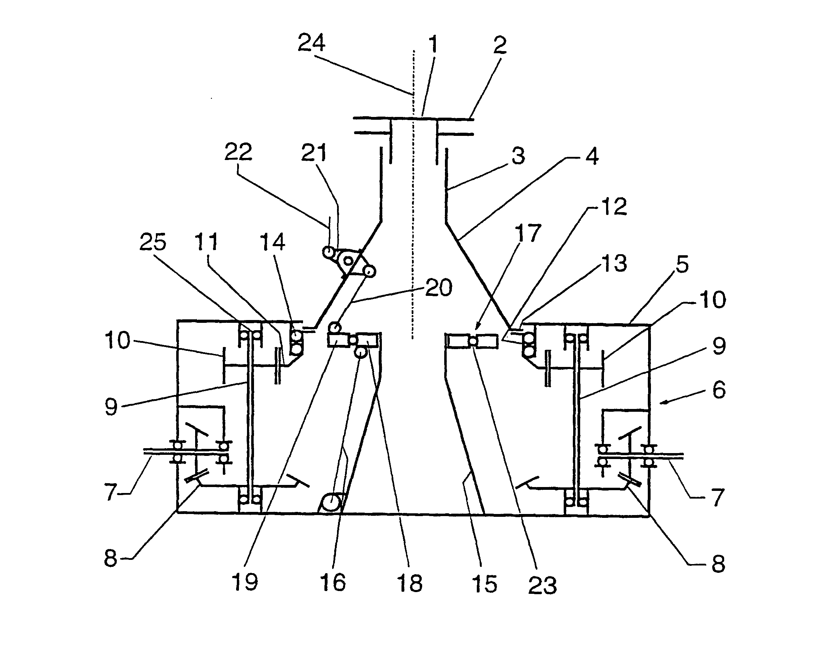

In der Zeichnung ist ein Ausführungsbeispiel der Erfindung dargestellt. Die einzige Figur zeigt einen schematischen Längsschnitt durch einen Rotormast und ein sich anschließendes Getriebe.

Mit einem Rotorkopf 1 eines Hauptrotors eines Hubschraubers sind Rotorblätter 2 um ihre Längsachse einstellbar verbunden. Sie werden über eine Taumelscheibe 17 und ein Steuergestänge angesteuert, das innere Steuerstangen 20 und äußere Steuerstangen 22 beinhaltet, die über einen an einem Rotormast 3 gelagerten Umlenkhebel 21 miteinander gelenkig verbunden sind. Auf den Umfang verteilt sind mehrere Steuergestänge 20, 21, 22 vorgesehen. Die inneren Steuerstangen 20 greifen an einem drehbaren Teil 19 der Taumelscheibe 17 an, der über eine nicht dargestellte zweite Schere mit dem Rotormast 3 verbunden ist.

Der drehbare Teil 19 der Taumelscheibe 17 ist mittels eines Radial- und Axiallagers 23 an einem stationären Teil 18 der Taumelscheibe 17 gelagert. Dieser ist über eine ebenfalls nicht dargestellte erste Schere mit einem Tragrohr 15 drehfest, aber axial verschieblich und zur Rotationsachse 24 des Rotormastes 3 kippbar verbunden. Das Tragrohr 15 ist fest mit einem Gehäuse 5 eines Getriebes 6 verbunden. Mindestens drei auf den Umfang verteilte Stellglieder 16 bestimmen die axiale Position und die Neigung der Taumelscheibe 17.

Nicht näher dargestellte Triebwerke treiben über Antriebswellen 7 und das Getriebe 6 den Rotormast 3 an, der mit dem Rotorkopf 1 drehfest verbunden ist. Das Getriebe 6 besitzt für jedes Triebwerk eine Kegelradstufe 8, die jeweils über eine Zwischenwelle 9 ein Stirnrad 10 antreibt. Die Zwischenwelle 9 verläuft parallel zur Rotationsachse 24, so daß die Stirnräder 10 mit einem Sammelrad 11 kämmen, das ebenfalls als Stirnrad ausgebildet ist und so in einfacher Weise große Drehmomente übertragen kann. Die Drehzahlen der Triebwerke von über 6 000 U/min werden durch das Getriebe 6 auf Drehzahlen des Rotormastes 3 von etwa 400 U/min untersetzt.

An dem Sammelrad 11 ist ein Wellenstumpf 12 angeformt, der an einem Flansch 13 des Rotormastes 3 angeflanscht ist. Der Wellenstumpf 12 ist durch ein Lager 14 auf einem großen Durchmesser im Gehäuse 5 des Getriebes 6 gelagert. Somit ist das Sammelrad 11 und der Rotormast 3, der einen zum Getriebe 6 hin sich erweiternden trichterförmigen Teil 4 aufweist, durch ein gemeinsames Lager 14 gelagert. Aufgrund des großen Durchmessers sind die Spannungen im Bereich des Flansches 13 sowie die spezifischen Lagerkräften des Lagers 14 gering. Dadurch und durch eine Lagerung 25 der Zwischenwelle 9 mit dem Stirnrad 10 ergeben sich ein guter Zahneingriff des Stirnrads 10 in das Sammelrad 11 und nur geringe Deformationen unter Last.

### Bezugszeichen

- 1: Rotorkopf
- 2: Rotorblatt
- 3: Rotormast
- 4: trichterförmiger Teil
- 5: Gehäuse
- 6: Getriebe
- 7: Antriebswelle
- 8: Kegelradstufe
- 9: Zwischenwelle
- 10: Stirnrad
- 11: Sammelrad
- 12: Wellenstumpf
- 13: Flansch
- 14: Lager
- 15: Tragrohr
- 16: Stellglied
- 17: Taumelscheibe
- 18: stationärer Teil
- 19: drehbarer Teil
- 20: innere Steuerstange
- 21: Umlenkhebel
- 22: äußere Steuerstange
- 23: Radial- und Axiallager
- 24: Rotationsachse
- 25: Lagerung

## Patentansprüche

1. Hubschrauber mit folgenden Merkmalen:
- ein Rotorkopf (1) ist mit einem Rotormast (3) drehfest verbunden, der in einem Gehäuse (5) eines Getriebes (6) drehbar gelagert ist;
- eine oder mehrere Triebwerke treiben den Rotormast (3) über das Getriebe (6) mit einem Sammelrad (11) an, das am Rotormast (3) befestigt ist;
- eine Taumelscheibe (17) ist mit ihrem stationären Teil (18) über eine erste Schere drehfest, aber axial verschiebbar und zur Achse des Rotormastes (3) in allen Richtungen kippbar gelagert;
- ein drehbarer Teil (19) der Taumelscheibe (17) ist gegenüber dem stationären Teil (18) der Taumelscheibe (17) über Axial- und Radiallager (23) drehbar gelagert und am Rotorkopf (1) mittels einer zweiten Schere drehfest angelenkt;
- der Rotormast (3) erweitert sich zum Gehäuse (5) des Getriebes (6) hin trichterförmig, wobei das Sammelrad (11) über einen hohlen Wellenstumpf (12) am erweiterten Ende des Rotormastes (3) angeflanscht ist und der Wellenstumpf (12) und der Rotormast (3) gemeinsam im Gehäuse (5) drehbar gelagert sind,
**dadurch gekennzeichnet, dass** die Taumelscheibe (17) in den Bauraum des Getriebegehäuses (5) integriert ist.

2. Hubschrauber nach Anspruch 1, **dadurch gekennzeichnet, dass** die Taumelscheibe durch eine Getriebeschmierung versorgt wird.

3. Hubschrauber nach Anspruch 1 oder 2, **dadurch gekennzeichnet, dass** die Taumelscheibe (17) im Getriebe (6) im Bereich des hohlen Wellenstumpfs (12) angeordnet ist.

4. Hubschrauber nach einem der Ansprüche 1 bis 3, **dadurch gekennzeichnet, dass** das Gestänge (20, 21, 22) zum Ansteuern der Rotorblätter (2) von dem drehbaren Teil (19) der Taumelscheibe (17) aus durch den Mantel des trichterförmigen Teils (4) des Rotormastes (3) nach außen geführt ist.

5. Hubschrauber nach Anspruch 4, **dadurch gekennzeichnet, dass** das Gestänge (20, 21, 22) einen am Rotormast (3) gelagerten Umlenkhebel (21) beinhaltet.

## Claims

1. Helicopter with the following features:
- a rotor head (1) is non-rotatably connected to a rotor mast (3) which is rotatably mounted in a housing (5) of a gear mechanism (6);
- one or more motors drive the rotor mast (3) via the gear mechanism (6) by means of a compensating gear (11) which is secured to the rotor mast (3);
- a wobble plate (17) is mounted at its stationary part (18) via a first brace so as to be non-rotatable but axially slidable and tiltable in all directions relative to the axis of the rotor mast (3) ;
- a rotatable part (19) of the wobble plate (17) is mounted so as to rotate relative to the stationary part (18) of the wobble plate (17) via axial and radial bearings (23) and is non-rotatably linked to the rotor head (1) by means of a second brace;
- the rotor mast (3) becomes wider towards the housing (5) of the gear mechanism (6) in a funnel-shaped arrangement, the summarising gear (11) being flange-mounted at the wider end of the rotor mast (3) via a hollow stub axle (12) and the stub axle (12) and the rotor mast (3) are mounted so as to rotate jointly in the housing (5),
**characterised in that** the wobble plate (17) is integrated in the mounting space of the gear housing (5).

2. Helicopter as claimed in claim 1, **characterised in that** the wobble plate is supplied with lubricant.

3. Helicopter as claimed in claim 1 or 2, **characterised in that** the wobble plate (17) is disposed in the gear (6) in the region of the hollow stub axle (12).

4. Helicopter as claimed in one of claims 1 to 3, **characterised in that** the linkage (20, 21, 22) for activating the rotor blades (2) is guided outwards from the rotatable part (19) of the wobble plate (17) by means of the casing of the funnel-shaped part (4) of the rotor mast (3).

5. Helicopter as claimed in claim 4, **characterised in that** the linkage (20, 21, 22) incorporates a deflector lever (21) mounted on the rotor mast (3).

## Revendications

1. Hélicoptère avec les caractéristiques suivantes:
- une tête de rotor (1) est reliée de manière solidaire en rotation à un mât de rotor (3) qui est logé de manière rotative dans le carter (5) d'une transmission (6);
- une ou plusieurs turbines entraînent le mât du rotor (3) par l'intermédiaire de la transmission (6) avec une roue collectrice (11) fixée au mât du rotor (3);
- un plateau oscillant (17) est logé, par l'intermédiaire d'une première cisaille, de manière solidaire en rotation mais mobile et de manière basculante dans toutes les directions par rapport à l'axe du mât du rotor (3), avec une partie stationnaire (18);
- une partie rotative (19) du plateau oscillant (17) est logée de manière rotative, par rapport à la partie stationnaire (18) du plateau oscillant (17), par l'intermédiaire de paliers axiaux ou radiaux (23) et articulée de manière solidaire en rotation au niveau de la tête du rotor (1) à l'aide d'une deuxième cisaille ;
- le mât du rotor (3) s'élargit vers le carter (5) de la transmission (6) avec une forme conique, la roue collectrice (11) étant bridée par l'intermédiaire d'un bout d'arbre creux (12) au niveau de l'extrémité élargie du mât du rotor (3), et le bout d'arbre (12) et le mât du rotor (3) sont logés ensemble de manière rotative dans le carter (5),
**caractérisé en ce que** le plateau oscillant (17) est intégré dans l'espace du carter de transmission (5).

2. Hélicoptère selon la revendication 1, **caractérisé en ce que** le plateau oscillant est alimenté à l'aide d'une lubrification de transmission.

3. Hélicoptère selon la revendication 1 ou 2, **caractérisé en ce que** le plateau oscillant (17) est disposé dans la transmission (6) au niveau du bout d'arbre creux (12).

4. Hélicoptère selon l'une des revendications 1 à 3, **caractérisé en ce que** la tringlerie (20, 21, 22) de commande des pales du rotor (2) sont guidées vers l'extérieur à partir de la partir rotative (19) du plateau oscillant (17) à travers le revêtement de la partie conique (4) du mât du rotor (3).

5. Hélicoptère selon la revendication 4, **caractérisé en ce que** la tringlerie (20, 21, 22) comprend un levier de renvoi (21) logé au niveau du mât du rotor (3).
